# FASCICULE DE BREVET EUROPEEN

(11) **EP 2 090 799 B1**
(45) Date de publication et mention de la délivrance du brevet: **04.05.2011**
(21) Numéro de dépôt: 09151949.6
(22) Date de dépôt: 03.02.2009
(51) Int. Cl.: F16D 65/14, F16D 51/00

(54) **Frein à tambour pour véhicule automobile et véhicule automobile muni d'un tel frein à tambour.**
Trommelbremse für ein Kraftfahrzeug sowie hiermit versehenes Kraftfahrzeug
Drum brake for an automotive vehicle and vehicle equipped with such a brake

(30) Priorité: 12.02.2008 FR 0800844
(43) Date de publication de la demande: 19.08.2009
(73) Titulaire: Robert Bosch GmbH, 70442 Stuttgart (DE)
(72) Inventeur: Dupuis, Vincent, 94100 Saint Maur (FR); Beccafico, Nathalie, 93140 Garges les Gonnesses (FR)
(74) Mandataire: Hurwic, Aleksander Wiktor

(56) Documents cités:
- DE-A1- 19 507 588
- DE-A1-102006 031 329
- US-A- 2 235 412
- US-B1- 6 405 838

## Description

La présente invention concerne un frein à tambour pour véhicule automobile ainsi qu'un véhicule automobile muni d'un tel frein à tambour.

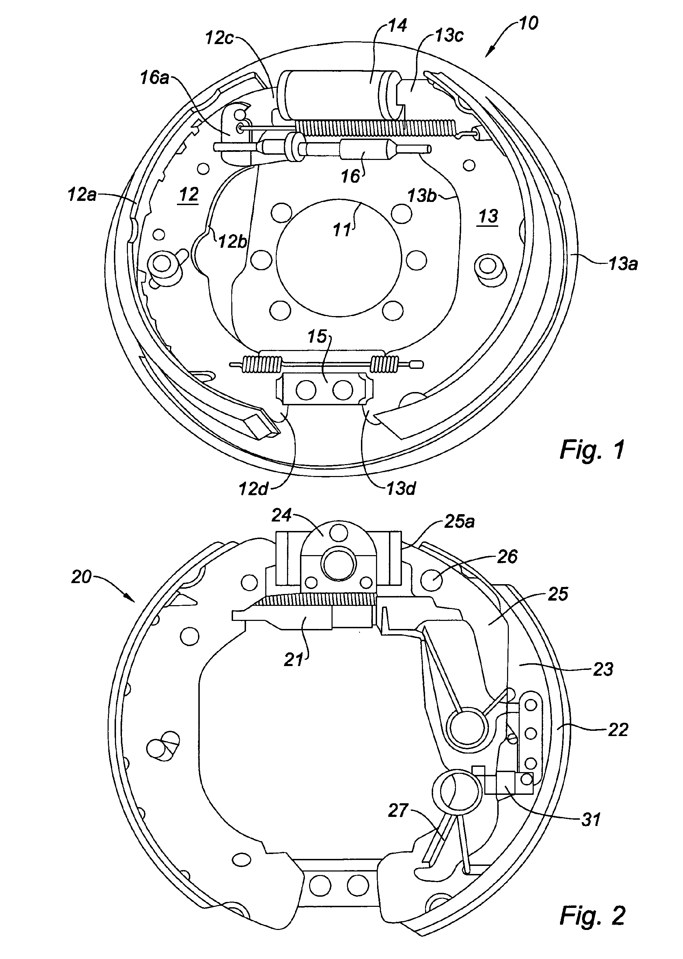

La figure 1 représente un frein à tambour connu pour véhicule automobile. Ce frein 10 comprend un plateau 11 sur la surface duquel sont agencés des segments 12 et 13 en forme d'arc de cercle.

Les parties concaves 12b ou 13b de ces segments 12 ou 13 sont en vis-à-vis tandis que leurs parties convexes 12a ou 13a sont dirigées vers l'extérieur du plateau 11. Ces parties convexes 12a ou 13a sont munies d'une garniture ou de patins susceptibles de venir au contact avec un tambour - non représenté - solidaire d'une roue afin d'obtenir un freinage de cette roue.

Le frein 10 comprend un cylindre de roue 14 disposé entre des premières extrémités 12c et 13c des segments 12 ou 13. De plus, une butée 15 est disposée entre les secondes extrémités 12d ou 13d de ces segments 12 ou 13.

Ainsi, le frein à tambour peut être commandé en déplaçant des pistons du cylindre de roue 14. Plus précisément, le cylindre de roue 14 agit à travers ses pistons sur les premières extrémités 12c et 13c des segments 12 ou 13.

Il entraîne ainsi le pivotement de ces segments par appui sur la butée 15 et, finalement, le contact de la garniture avec le tambour non représenté.

Par ailleurs, le frein 10 comprend une biellette 16 visant à maintenir le frein à tambour dans une position de freinage. Typiquement, un tel blocage est utilisé pour maintenir activé le frein lors d'un stationnement du véhicule.

A cet effet, la biellette 16 comprend des moyens internes modifiant sa longueur lors des déplacements des âmes et segments 12 et 13 afin de garder le contact avec ces dernières.

Ces modifications de longueur peuvent être réalisées par un loquet 16a coopérant avec la biellette de telle sorte que les segments 12 et 13 soient également maintenus dans leur position de manière à ce que le jeu tambour garniture soit constant.

Un tel frein à tambour, connu par exemple de DE 19507588, présente l'inconvénient de requérir un effort physique conséquent de l'utilisateur pour commander mécaniquement et donc pour activer le frein à main. De fait, l'utilisateur doit mettre sous tension un câble dont une extrémité est reliée au frein a tambour et une autre extrémité est reliée à la poignée de frein à main sur laquelle il agit.

La présente invention vise à remédier à cet inconvénient. C'est pourquoi, l'invention concerne un procédé de commande d'un frein à tambour pour véhicule automobile comprenant un cylindre visant déplacer un segment muni d'une garniture de freinage dans une position de freinage, une biellette pouvant être bloquée pour maintenir le segment dans cette position de freinage, et un levier en contact sur le cylindre de roue et fixé sur le segment par une liaison pivot, il comprend les étapes de :
- Commander une action du cylindre de roue sur le levier afin d'entraîner un déplacement du segment et du levier dans une position de freinage, et
- Poursuivre l'action du cylindre de roue sur l'extrémité du levier afin d'entraîner un pivotement du dit levier bloquant la biellette dans la position de freinage et,
- Commander électriquement le déplacement d'une cale assurant le maintien de la biellette par le blocage du levier.

Un tel procédé permet de bloquer un frein à tambour dans une position de freinage, par exemple pour un stationnement, avec un effort limité.

De fait, le frein à tambour conforme à l'invention utilise l'action du cylindre roue, assisté par un servomoteur, pour placer différents éléments du frein à tambour dans une position de freinage.

En outre, le maintien de ces éléments dans une position de freinage s'effectue au moyen d'une cale commandée électriquement, ce qui limite l'effort physique requis pour actionner le frein de stationnement.

Finalement, il convient de noter qu'il est possible d'intégrer dans un frein à tambour existant les éléments nécessaires à la mise en oeuvre du procédé.

Dans une réalisation, le procédé comprend l'étape pour le cylindre de roue de déplacer le segment et le levier en agissant sur ce dernier.

Selon une réalisation, le procédé comprend l'étape d'associer un ressort de maintien au levier et au segment pour déterminer, en fonction de la raideur du ressort de maintien, un seuil d'action du cylindre sur le segment au-delà duquel cette action entraîne un pivotement du levier.

Dans une réalisation, le procédé comprend l'étape de munir le segment d'un levier de blocage.

Selon une réalisation, le procédé comprend l'étape d'utiliser un ressort de rappel agencé au levier et au bras de blocage.

Dans une réalisation, le procédé comprend l'étape de commander le déplacement de la cale à l'aide de moyens hydrauliques ou électromagnétiques.

L'invention concerne également un frein à tambour pour véhicule automobile comprenant un cylindre de roue visant à déplacer un segment et un levier munis d'une garniture de freinage dans une position de freinage, une biellette pouvant être bloquée pour maintenir le segment dans cette position de freinage, caractérisé en ce qu'il comprend un bras de blocage fixé sur le segment par une liaison pivot et une cale pouvant être commandée électriquement de façon à mettre en oeuvre un procédé conforme à l'une des réalisations précédentes.

D'autres caractéristiques et avantages de l'invention apparaîtront à la lumière de la description d'une réalisation de l'invention effectuée ci-dessous, à titre illustratif et non limitatif, en faisant référence aux figures ci-jointes sur lesquelles :
- la figure 1, déjà décrite, est une vue de face d'un frein à tambour connu,
- la figure 2 est une vue de face d'un frein à tambour conforme à l'invention,
- les figures 3a, 3b et 3C sont des vues partielles du frein décrit à la figure 2 lors de son activation comme frein de stationnement conformément à l'invention,
- la figure 4 est un schéma représentatif des variations de différents paramètres du frein décrit à la figure 2 lors de sa mise en oeuvre,
- les figures 5a et 5b sont des vues partielles du frein décrit à la figure 2 lors de sa désactivation comme frein de stationnement conformément à l'invention, et
- la figure 6 est un schéma représentatif des variations de différents paramètres du frein décrit à la figure 2 lors de sa désactivation.

Comme représenté sur la figure 2, un frein à tambour 20 pour véhicule automobile conforme à l'invention comprend un cylindre 24 destiné à agir sur un segment 23 muni d'une garniture 22 de freinage.

Conformément à l'invention, ce frein 20 comprend un levier 25 agencé au segment 23 par une liaison pivot 26. Ce levier 25 se situe entre le cylindre 24 et le segment 23 de telle sorte que l'action du cylindre 24 sur le segment 23 s'effectue par son intermédiaire.

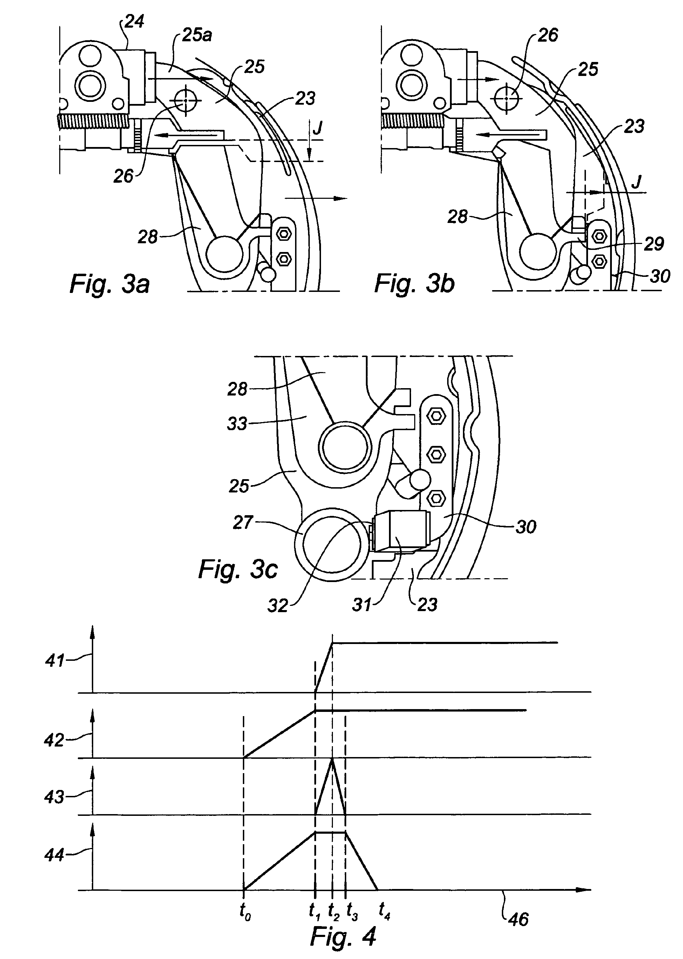

Lorsqu'une activation du frein dans une position de stationnement est requise, le cylindre 24 agit sur le levier 25. Dans un premier temps, cette action du cylindre 24 sur une extrémité 25a du levier 25 entraîne la translation de ce dernier et de l'âme et du segment 23 comme indiqué sur la figure 3a par des flèches.

Par ailleurs, un ressort de maintien 27 est associé au levier 25 et au segment 23. Ce ressort de maintien 27 est solidaire du segment 23 et du levier 25 et bloque le pivotement de ce dernier.

Toutefois, dans un second temps, un pivotement du levier 25 par rapport à sa liaison pivot 26 se produit lorsque l'action du cylindre 24 sur le segment 25 dépasse un seuil dépendant de la raideur du ressort 27.

Cette action atteint ce seuil lorsque la garniture 22 est en contact avec le tambour tandis que l'action du cylindre 24 se poursuit sur le segment 23.

Dans ce cas, le ressort de maintien 27 ne peut empêcher le pivotement du levier 25 par rapport à sa liaison 26.

Comme montré sur la figure 3b, un tel pivotement du levier 25 bloque une biellette 21 de façon à maintenir le frein dans une position activée.

En effet, le levier 25 est muni d'un bras de blocage 28 dont une extrémité coopère avec la biellette 21, maintenant ainsi cette dernière dans cette position.

Plus précisément, ce bras de blocage 28 est relié au levier 25 par l'intermédiaire d'une liaison pivot associée à un ressort de rappel 33.

En référence à la figure 3c, une cale 32 est alors commandée de façon à se loger dans une ouverture du segment, entre le levier 25 et une pièce d'appui 30 bloquant ainsi ce dernier et, de façon corollaire, maintenant le frein en position de freinage.

A cet effet, une tige est dans le champ d'action d'un électroaimant 31 de telle sorte qu'elle peut être amenée à coulisser dans l'ouverture par l'action de l'électroaimant.

Ainsi, l'électroaimant contrôle le verrouillage du frein dans une position de freinage, permettant ainsi à un conducteur de verrouiller le frein à l'aide d'un simple bouton commandant cet électroaimant.

Il convient de noter que, pour assurer le positionnement correct du levier 25, le bras de blocage 28 présente une extrémité 29 venant à proximité d'une pièce d'appui 30 de verrouillage.

La figure 4 est un schéma récapitulatif des différentes étapes décrites ci-dessous. De fait, ce schéma représente les variations de la position de la cale (axe 41), de l'effort de freinage (axe 42), du courant de l'électroaimant (axe 43) et de l'action exercée par le cylindre 24 (axe 44) selon une même chronologie (axe 46).

Dans un premier temps, l'action croissante de la garniture de freinage entre un instant t0 et t1 résulte de l'accroissement de l'action fournie par le cylindre 24 au levier 25.

Cette action atteint à l'instant t1 une valeur seuil correspondant au positionnement de la garniture en position de freinage et au pivotement du levier 25.

Il convient de noter que, dans cette position, une extrémité 29 du bras 28 quitte le contact contre la pièce d'appui 30, ce qui permet d'assurer la position du segment vis-à-vis de la cale.

Par la suite, le cylindre peut relâcher sa pression car le positionnement de la cale assure le maintien du frein dans une position de verrouillage. Ainsi, le frein reste verrouillé, c'est-à-dire exerçant une action déterminée sur le tambour, tandis que le cylindre est relâché et la cale est maintenue en place.

Pour déverrouiller le frein, les différentes opérations décrites ci-dessus sont effectuées dans un ordre chronologiquement inverse.

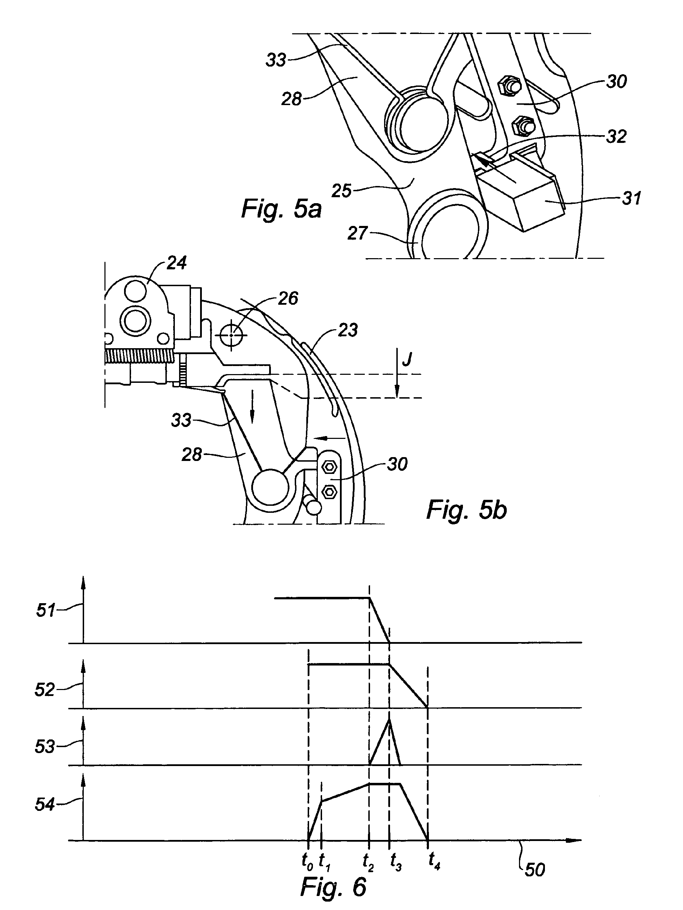

La figure 6 illustre les variations de ces paramètres, à savoir la position de la tige (axe 51), l'effort de freinage (axe 52), le courant alimentant l'électroaimant (axe 53) et l'action du cylindre 24 (axe 54).

Pendant le délai s'écoulant entre les instants T0 et T1, l'action du cylindre 24 sur le segment s'accroît rapidement. Dans ce cas, le levier est maintenu dans une position qui contraint le ressort de maintien.

Pendant le délai s'écoulant entre les instants T1 et T2, l'action du cylindre 24 sur le levier 25 s'accroît plus lentement car cette action doit s'opposer à l'action du ressort de maintien.

A cet instant T2, la tige aimantée peut être déplacée au moyen de l'électroaimant 32 comme montré par une flèche sur la figure 5a.

Dans ce cas, la diminution progressive de l'action du cylindre sur le segment permet un retour de ce dernier, et du segment, à une position de freinage désactivée selon le sens des flèches représentées sur la figure 5b.

## Revendications

1. Procédé de commande d'un frein à tambour (20) pour véhicule automobile comprenant un cylindre de roue (24) visant à déplacer un segment (23) muni d'une garniture (22) de freinage dans une position de freinage, une biellette (21) pouvant être bloquée pour maintenir le segment (23) dans cette position de freinage, et un levier (25) en contact sur le cylindre de roue (24) et fixé sur le segment (23) par une liaison pivot (26), le procédé comprenant l'étape de :
- Commander une action du cylindre (24) sur le levier (25) afin d'entraîner un déplacement du segment (23) et du levier (25) dans une position de freinage,
**caractérisé en ce que** le procéde comprend les étapes de
- Poursuivre l'action du cylindre (24) sur l'extrémité du levier (25) afin d'entraîner un pivotement du dit levier (25) bloquant la biellette (21) dans la position de freinage, et
- Commander électriquement le déplacement d'une cale(32)assurant le maintien de la biellette (21) par le blocage du levier (25)

2. Procédé selon la revendication 1 **caractérisé en ce qu'**il comprend l'étape pour le cylindre (24) de déplacer le segment (23) et le levier (25) en agissant sur ce dernier.

3. Procédé selon la revendication 2 **caractérisé en ce qu'**il comprend l'étape d'associer un ressort de maintien (27) au levier (25) et au segment (23) pour déterminer, en fonction de la raideur du ressort de maintien (27), un seuil d'action du cylindre (24) sur le levier (25) au-delà duquel cette action entraîne un pivotement du levier (25).

4. Procédé selon l'une des revendications précédentes **caractérisé en ce qu'**il comprend l'étape de commander le déplacement de la cale (32) lorsqu'une extrémité d'un bras de blocage relié au levier vient au contact d'une butée (30).

5. Procédé selon l'une des revendications précédentes **caractérisé en ce qu'**il comprend l'étape de relier le bras de blocage (28) au levier (25) par une liaison pivot associée à un ressort de rappel (33).

6. Procédé selon l'une des revendications précédentes **caractérisé en ce qu'**il comprend l'étape de commander le déplacement de la cale (32) à l'aide de moyens hydrauliques ou électromagnétiques.

7. Frein à tambour pour véhicule automobile comprenant un cylindre de roue (24) visant à déplacer un segment (23) muni d'une garniture (22) de freinage dans une position de freinage, une biellette (21) pouvant être bloquée pour maintenir le segment (23) dans cette position de freinage, et un levier (25) fixé sur le segment (23) par une liaison pivot (26), **caractérisé en ce qu'**il comprend une cale (32) pouvant être commandée électriquement de façon à mettre en oeuvre un procédé conforme à l'une des revendications précédentes.

## Claims

1. Method for controlling a drum brake (20) for a motor vehicle comprising a wheel cylinder (24) for displacing a segment (23) provided with a brake lining (22) into a braking position, and a connecting rod (21) capable of being locked to maintain the segment (23) in this braking position, and a lever (25) in contact with the wheel cylinder (24) and fixed to the segment (23) by a pivot connection (26), the method comprising the step of:
- controlling an action of the cylinder (24) on the lever (25) in order to cause a displacement of the segment (23) and of the lever (25) into a braking position,
**characterized in that** the method comprises the steps of :
- continuing the action of the cylinder (24) on the end of the lever (25) in order to cause a pivoting of said lever (25) locking the connecting rod (21) in the braking position, and
- electrically controlling the displacement of a wedge (32) ensuring the hold of the connecting rod (21) by the locking of the lever (25).

2. Method according to Claim 1, **characterized in that** it comprises the step of the cylinder (24) displacing the segment (23) and the lever (25) acting said lever.

3. Method according to Claim 2, **characterized in that** it comprises the step of associating a retaining spring (27) with the lever (25) and with the segment (23) to determine, depending on the stiffness of the retaining spring (27), a threshold for the action of the cylinder (24) on the lever (25) beyond which said action causes a pivoting of the lever (25).

4. Method according to one of the preceding claims, **characterized in that** it comprises the step of controlling the displacement of the wedge (32) when one end of a locking arm connected to the lever comes into contact with a stop (30).

5. Method according to one of the preceding claims, **characterized in that** it comprises the step of connecting the locking arm (28) to the lever (25) by a pivot connection associated with a restoring spring (33).

6. Method according to one of the preceding claims, **characterized in that** it comprises the step of controlling the displacement of the wedge (32) using hydraulic or electromagnetic means.

7. Drum brake for a motor vehicle comprising a wheel cylinder (24) for displacing a segment (23) provided with a brake lining (22) into a braking position, and a connecting rod (21) capable of being locked to maintain the segment (23) in this braking position, and a lever (25) fixed to the segment (23) by a pivot connection (26), **characterized in that** it comprises a wedge (32) able to be controlled electrically so as to implement a method according to one of the preceding claims.

## Patentansprüche

1. Verfahren zum Steuern einer Trommelbremse (20) für ein Kraftfahrzeug, mit einem Radzylinder, der darauf abzielt, eine Bremsbacke (23) zu verschieben, die mit einer Bremsgarnitur (22) in einer Bremsstellung versehen ist, mit einer Druckstange (21), die blockiert werden kann, um die Bremsbacke (23) in dieser Bremsstellung zuhalten, und mit einem Hebel (25), der am Radzylinder (24) in Kontakt steht und an der Bremsbacke (23) über eine Schwenkverbindung (26) befestigt ist, wobei das Verfahren folgende Schritte aufweist:
- Steuerung einer Betätigung des Zylinders (24) auf den Hebel (25), um eine Verschiebung der Bremsbacke (23) und des Hebels (25) in eine Bremsstellung herbeizuführen,
**dadurch gekennzeichnet, dass** das Verfahren folgende Schritte aufweist:
- Fortsetzung der Betätigung des Zylinders (24) auf das Ende des Hebels (25), um ein Schwenken des Hebels (25) herbeizuführen, der die Druckstange (21) in der Bremsstellung blockiert, und
- Elektrische Steuerung der Verschiebung eines Klotzes (32), der das Halten der Druckstange (21) durch Blockierung des Hebels (25) gewährleistet.

2. Verfahren nach Anspruch 1, **dadurch gekennzeichnet, dass** es für den Zylinder (24) den Schritt aufweist, bei dem die Bremsbacke (23) und der Hebel verschoben werden, indem Letzterer betätigt wird.

3. Verfahren nach Anspruch 2, **dadurch gekennzeichnet, dass** es den Schritt aufweist, bei dem dem Hebel und der Bremsbacke (23) eine Haltefeder (27) zugeordnet wird, um in Abhängigkeit von der Steifigkeit der Haltefeder (25) eine Schwelle der Betätigung des Zylinders (24) auf den Hebel (25) zu bestimmen, über welche hinaus diese Betätigung eine Schwenkung des Hebels (25) herbeiführt.

4. Verfahren nach einem der vorhergehenden Ansprüche, **dadurch gekennzeichnet, dass** es den Schritt aufweist, bei dem die Verschiebung des Klotzes (32) gesteuert wird, wenn ein Ende eines mit dem Hebel verbundenen Blockierungsarms mit einem Anschlag (30) in Berührung gelangt.

5. Verfahren nach einem der vorhergehenden Ansprüche, **dadurch gekennzeichnet, dass** es den Schritt aufweist, bei dem der Blockierungsarm (28) mit dem Hebel (25) über eine Schwenkverbindung verbunden wird, die einer Rückstellfeder zugeordnet ist.

6. Verfahren nach einem der vorhergehenden Ansprüche, **dadurch gekennzeichnet, dass** es den Schritt aufweist, bei dem der Klotz (32) mit Hilfe von hydraulischen oder elektromagnetischen Mitteln verschoben wird.

7. Trommelbremse für Kraftfahrzeug, mit einem Radzylinder, der darauf abzielt, eine Bremsbacke (23) zu verschieben, die mit einer Bremsgarnitur (22) in einer Bremsstellung versehen ist, mit einer Druckstange (21), die blockiert werden kann, um die Bremsbacke (23) in dieser Bremsstellung zu halten, und mit einem Hebel (25), der am Radzylinder (24) in Kontakt steht und an der Bremsbacke (23) über eine Schwenkverbindung (26) befestigt ist, **dadurch gekennzeichnet, dass** sie einen elektrisch steuerbaren Klotz (32) aufweist, um das Verfahren nach einem der vorhergehenden Ansprüche auszuführen.
